# EUROPEAN PATENT SPECIFICATION

(11) **EP 1 650 073 B1**
(45) Date of publication and mention of the grant of the patent: **03.09.2008**
(21) Application number: 04425785.5
(22) Date of filing: 19.10.2004
(51) Int. Cl.: B60K 37/04

(54) **Automotive dashboard and method of fabricating a dashboard assembly comprising such a dashboard**
Armaturenbrett für ein Kraftfahrzeug und Herstellungsverfahren einer Armaturenbrettanordnung mit einem solchen Armaturenbrett
Planche de bord pour véhicule automobile et procédé de fabrication d'un ensemble de planche de bord avec une telle planche de bord

(43) Date of publication of application: 26.04.2006
(73) Proprietor: C.R.F. SOCIETÀ CONSORTILE PER AZIONI, 10043 Orbassano (Torino) (IT)
(72) Inventor: Carignano, Massimo c/o C.R.F., 10043 Orbassano (IT); Cavalla, Giancarlo c/o C.R.F., 10043 Orbassano (IT); Masoero, Giorgio c/o C.R.F., 10043 Orbassano (IT); Storgato, Angelo c/o C.R.F., 10043 Orbassano (IT)
(74) Representative: Jorio, Paolo

(56) References cited:
- WO-A-98/30418
- DE-A1- 4 029 378
- DE-A1- 19 956 970
- FR-A- 2 740 422
- US-B1- 6 257 897
- PATENT ABSTRACTS OF JAPAN vol. 1998, no. 05, 30 April 1998 (1998-04-30) & JP 10 016688 A (INOAC CORP), 20 January 1998 (1998-01-20)

## Description

The present invention relates to an automotive dashboard.

In modern vehicles, the dashboard normally comprises a shell made of plastic material and fitted with electric/electronic instruments, i.e. displays, indicators, devices and/or controls, connected to the vehicle electric system wiring.

The wiring is normally taped or otherwise fastened into bundles, which have branch cables for connection to the instruments on the dashboard and to the various electric system connectors.

In known technology, both the cable bundles and branch cables, after being taped, are possibly soundproofed, and are then installed on the vehicle, where they are fixed by means of various local fastening devices, such as clamps, hooks or similar, to a metal support cross member supporting the dashboard.

Routing and fixing the cables to the support cross member, assembling the instruments, and electric connection of the cables to the instruments, are all done directly on the vehicle at the vehicle assembly stage.

Dashboards and wiring produced as described above have various drawbacks. First of all, being unsuitable for automated, e.g. robot, installation, the electric cable bundles take a long time to prepare and install, and must be fixed by hand to the support cross member, located according to the attachments available on the vehicle, and then connected to the various electric/electronic instruments according to the instrument layout on the dashboard.

The cable bundles also frequently work loose from the local fastening devices, thus possibly resulting in malfunctioning of the vehicle electric system and, in the event of damage to the wiring insulation, in electric contact, and hence short-circuiting, with the metal support cross member.

Known dashboards of the above type, complete with the electric/electronic instruments, must also be tested, which can only be done after on-vehicle assembly. This poses problems not only as regards actual on-vehicle testing, but also as regards any repairs or replacements required after testing.

From document DE 40 29 378 A1, it is known a dashboard for a motor vehicle, having a thermoplastic shell, on which some raceways for cables are provided. Each raceway is secured to an upper face of a portion of the shell an is formed of an open section metallic reinforcing profile opening upwards. The cables are inserted in the raceways after the latter have been secured to the shell, and are held in position by discrete plastic snap clips.

It is an object of the present invention to provide an automotive dashboard designed to provide a straightforward, low-cost solution to the aforementioned drawbacks, and which in particular provides for fast, easy preparation, assembly, connection, and testing of the wiring, and for optimizing the wiring layout.

According to the present invention, there is provided a dashboard for a vehicle having an electric system including wiring for a number of instruments and/or controls on the vehicle, said dashboard comprising a shell formed of a first plastic material and having an underside face, and at least a raceway for a number of electric cables or a cable bundle, said raceway being made separately from said shell and being then connected integrally therewith, at least one of said cables and/or said cable bundle (18, 19) being embedded in a substantially fixed position inside said raceway; characterized in that said raceway is made of a second plastic material compatible with said first plastic material, said raceway being defined by a hollow section forming a channel with a closed-cross-section, said hollow section being secured to said underside face, said hollow section comprising a wall mating with and resting on said underside face when so connected.

The present invention also relates to a method of fabricating an automotive dashboard assembly.

According to the present invention, there is provided a method of fabricating a dashboard assembly of a vehicle comprising a shell provided with an underside face, and an electric system including wiring for a number of components and/or connectors, comprising the steps of:
- forming said shell moulded in one piece with a first plastic material;
- forming separately said raceway with a plastic material compatible with the plastic material of said shell, said raceway defining at least a hollow section forming a channel with a closed-cross-section comprising a wall adapted to mate with and rest on said underside face;
- forming said wiring by positioning a number of electric cables successively along respective paths according to the route of at least part of said raceway to form corresponding bundles;
- embedding at least one of said cables and/or one of said bundles inside said channel in a foam or in the plastic material of said channel;
- preassembling said components and/or connectors on said shell;
- connecting said components and/or connectors to said electric cables; and
- connecting said raceway integrally to said underside face.

A preferred, non-limiting embodiment of the invention will be described by way of example with reference to the accompanying drawings, in which:
Figure 1 shows a partial underside front view in perspective of a first embodiment of the dashboard according to the invention;
Figure 2 shows a plan view of the dashboard, together with a wiring diagram;
Figures 3 and 4 show larger-scale cross sections of a detail of the dashboard, and two variations of the detail according to the invention;
Figure 5 shows a larger-scale, partly sectioned exploded view of a further detail of the dashboard.

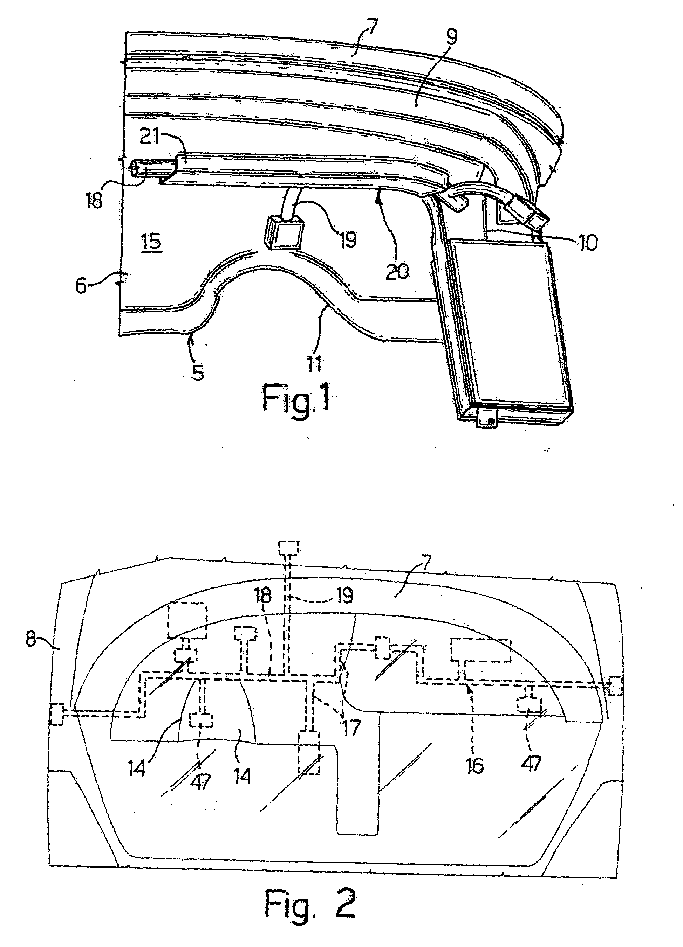

With reference to Figure 1, number 5 indicates as a whole a dashboard for a vehicle, e.g. a passenger car. Dashboard 5 comprises a shell 6 made of plastic material and which fits to a base member 7 for attaching the vehicle windscreen (not shown in the drawings). Base member 7 is fitted to the vehicle frame 8, indicated by the dot-and-dash lines in Figure 2, is curved, and is provided underneath with a reinforcing member 9 (Figure 1) in the form of a channel for feeding air to the windscreen.

Shell 6 comprises two lateral ends 10, only one of which is shown in Figure 1; a rear edge 11; and an underside face 15, to which is fixed part of an electric system indicated as a whole by 16 and shown schematically by the dash lines in Figure 2. Electric system 16 includes wiring 17 for the electric/electronic instruments on dashboard 5, i.e. for a number of instruments, indicators, devices and controls, such as lights, switches, levers, instrument panel, etc..

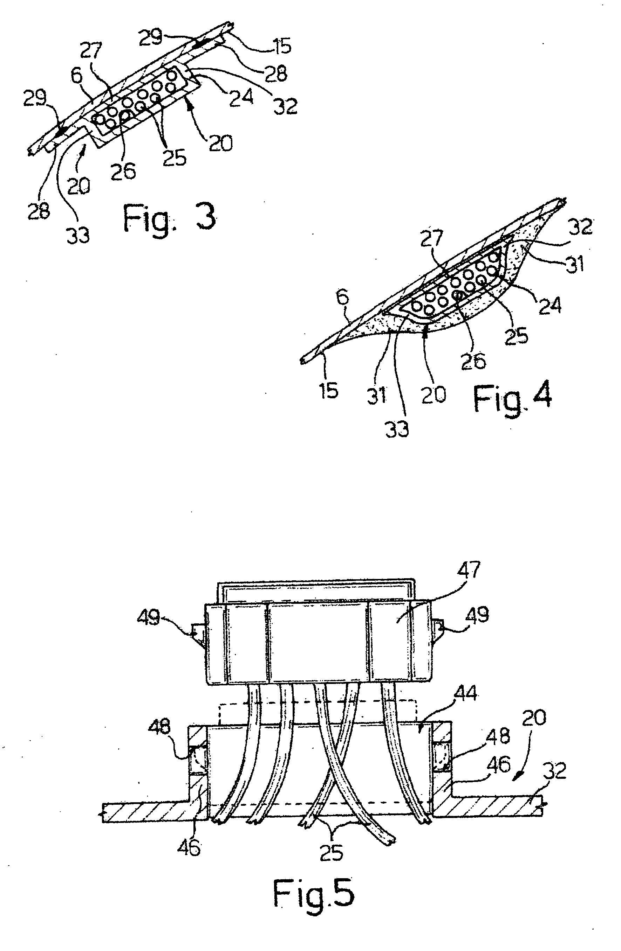

Wiring 17 comprises a main bundle 18 of electric cables 25 (see Figures 3 and 4), and one or more bundles 19 of electric cables 25 branching from main bundle 18.

According to the invention, wiring 17 is fully integrated with shell 6 of dashboard 5. More specifically, the underside face 15 of shell 6 has at least one raceway 20 (Figure 1) housing a corresponding cable bundle 18, 19. In the Figure 1 example, raceway 20 is only provided for main bundle 18, preferably has a constant cross section, and curves from one lateral end 10 to the other of shell 6.

In an embodiment of the invention, raceway 20 is bonded or welded to the underside face 15 of shell 6. Bundle 18 of electric cables 25 can be inserted in the raceway 20 (Figures 2 and 3) prior to the attachment. The raceway 20 is defined by a box section 24 having a closed-cross-section channel 26 in which bundle 18 of electric cables 25 is housed. Box section 24 has a wall 27 which mates with the underside face 15 of shell 6, and two lateral tabs 32 and 33. Box section 24 is made of plastic material compatible with that of shell 6, to ensure permanent attachment.

In the Figure 3 variation, wall 27 of box section 24 projects widthwise to form two opposite flanges 28 outside channel 26, which preferably has a rectangular cross section. Once the cable bundle 18, 19 is inserted inside channel 26, the two flanges 28 of wall 27 are welded electrically to the underside face 15 of shell 6 by weld spots or beads 29.

In the Figure 4 variation, box section 24 is fixed to the underside face 15 of shell 6 by applying foam cover material 31 of appropriate thickness. The cover material must obviously be compatible with the material of both shell 6 and box section 24; and, in this case too, the foam material 31 is applied after cable bundle 18, 19 is inserted inside channel 26.

Each raceway 20 may have at least one lateral opening 44 (Figure 5) for the passage of electric cables 25 of a branch bundle 19. More specifically, lateral opening 44 may be formed in one of the two tabs 32, 33 of raceway 20 in Figures 3 and 4. Opening 44 is bounded by lateral walls 46 connected to relative tab 32, 33, and houses a component or electric connector 47 of electric system 16 (see also Figure 2). At least two opposite walls 46 of opening 44 are perpendicular to relative tab 32, 33, and have openings 48 into which click corresponding appendixes 49 on component or connector 47. Each appendix 49 preferably has a cross section in the form of a right-angle trapezium.

Dashboard 5 may be fabricated and integrated with the electric/electronic instruments off the vehicle assembly line, i.e. by preassembling the instruments, indicators, controls, etc.. to shell 6.

The method comprises the initial steps of forming shell 6 and raceway 20, and housing at least one electric cable inside raceway 20. Shell 6 and raceway 20 are formed separately and then connected integrally to each other, as in the Figures 1-4 solutions.

Cables 25 are inserted inside raceway 20 by determining, for each cable, a respective path along raceway 20, and automatically inserting each cable 25 along the predetermined path. The path of each cable 25 is preferably determined beforehand and memorized. Alternatively, it is determined when laying cables 25, by determining the course of raceway 20 or a trace representing the course of raceway 20.

Alternatively, bundle 18, 19 may be formed outside raceway 20 by laying cables 25 successively, and preferably automatically, along predetermined traces having the same course as raceway 20, partly taping bundle 18, 19, and then inserting the preformed bundle 18, 19 inside raceway 20.

In a preferred embodiment, a number of raceways are formed, each housing a respective set or module of cables 25. Once laid inside raceway 20, cables 25 are sealed in the raceway 20 and secured in substantially fixed positions, preferably automatically or by robots according to the path defined by raceway 20.

The cables are secured by feeding foam material (not shown) into raceway 20 to embed cables 25; or directly when forming raceway 20, by molding plastic material about cables 25, arranged previously along predetermined paths inside the mold of raceway 20, so that cables 25 are embedded in the plastic material of raceway 20 (in a manner not shown).

The following operations are also performed off the vehicle assembly line:
- the electric/electronic instruments are preassembled on shell 6;
- the instruments are connected electrically to cables 25;
- a number of terminal connectors, such as connector 47, are preassembled on the periphery of shell 6 and/or on the ends of raceway 20;
- cables 25 are connected electrically to the terminal connectors and so made ready for connection later to the other electric/electronic devices on the vehicle.

A dashboard assembly is thus obtained which can be tested off the vehicle assembly line, and which is ready for assembly to the vehicle with no further work required, other than mechanical connection to the supporting structures on the vehicle, and electric connection to the other electric/electronic devices on the vehicle.

The advantages, as compared with known technology, of dashboard 5 according to the invention, and of the method of fabricating the dashboard assembly off the assembly line, will be clear from the foregoing description.

In particular, dashboard 5 can be fully prepared, complete with all the necessary wiring 17, both cheaply and easily. Integrating cables 25 directly in dashboard 5 prevents short-circuiting with metal parts of the vehicle, and safeguards against disconnection or detachment of the cables during use.

The way in which cables 25 are laid, closed and secured, as described above, eliminates or at least reduces taping of the bundles of cables 25, and optimizes the layout of cables 25. In fact, the predetermined order and/or predetermined paths along which the cables are laid reduce routing time, the amount of wiring and material used, and the time taken to connect the cables to the instruments and connectors.

In other words, raceway 20 provides not only for housing but also for guiding or routing cables 25.

Moreover, the predetermined order and/or predetermined paths along which the cables are laid permit automated, e.g. robot, cable laying, thus reducing the risk of malfunctions caused by routing and electric connection errors.

Laying cables 25 directly inside raceway 20 eliminates the need to form bundles of cables separately from shell 6.

The way in which the cables are inserted, closed and secured inside raceway 20 eliminates vibration and knock of cables 25 against the walls of raceway 20, thus eliminating or reducing the need for additional soundproofing material.

By assembling the instruments and, therefore, all the electric/electronic components to shell 6 off the vehicle assembly line, manufacture of the dashboard assembly is simpler and faster, by eliminating interference with other component parts of the vehicle, and by being conducted on dedicated, automated, flexible production lines. Moreover, the dashboard assembly can be fitted quickly and easily to the vehicle, by being fitted beforehand with terminal connectors in predetermined positions.

By providing a number of raceways and laying cable modules, each housed in a respective dedicated raceway, cables 25 can be separated and routed efficiently according to the instrument layout on shell 6, and therefore according to the type of vehicle involved.

The method described also permits accurate, repeat programming of the work, thus improving production quality.

Clearly, changes may be made to dashboard 5 and to the dashboard assembly fabrication method as described herein without, however, departing from the scope of the accompanying Claims. For example, raceway 20 of dashboard 5 may be routed otherwise than as shown; and raceways or lateral extensions of raceway 20 may also be provided for branch bundles 19 of electric cables 25.

## Claims

1. A dashboard (5) for a vehicle having an electric system (16) including wiring (17) for a number of instruments and/or controls on the vehicle, said dashboard (5) comprising a shell (6) formed of a first plastic material and having an underside face (15), and at least a raceway (20) for a number of electric cables (25) or a cable bundle (18, 19), said raceway (20) being made separately from said shell (6) and being then connected integrally therewith, at least one of said cables (25) and/or said cable bundle (18, 19) being embedded in a substantially fixed position inside said raceway (20), **characterized in that** said raceway (20) is made of a second plastic material compatible with said first plastic material, said raceway (20) being defined by a hollow section (24) forming a channel (26) with a closed-cross-section, said hollow section (24) being secured to said underside face (15), said hollow section (24) comprising a wall (27) mating with and resting on said underside face (15) when so connected.

2. The dashboard as claimed in Claim 1, **characterized in that** said hollow section (24) is secured to said shell (6) by means of a cover foam material (31).

3. The dashboard as claimed in Claim 1, **characterized in that** said hollow section (24) comprises two opposite flanges (28) projecting from and in the form of an extension of said wall (27), said projecting flanges (28) being secured to said underside face (15) by bonding.

4. The dashboard as claimed in any one of the foregoing Claims, **characterized in that** said electric cables (25) are embedded inside said raceway (20) in a foam material or in the plastic material of said raceway (20).

5. The dashboard as claimed in any one of the foregoing Claims, wherein at least one electric component or connector (47) is to be connected to a cable (25) of said wiring (17), said channel (26) being provided with two lateral tabs (32, 33), **characterized in that** at least one of said tabs (32, 33) is provided with openings (44) for the passage of corresponding branch bundles (19), at least one of said openings (44) being adapted to house said electric connector (47).

6. The dashboard as claimed in Claim 5, **characterized in that** said at least one opening (44) is defined by a pair of lateral opposite walls (46) integral with said at least one tab (32, 33) and perpendicular therewith, said opposite walls (46) being provided with apertures (48) adapted to be snap engaged by corresponding projections (49) of an electric component or connector (47), each said projection (49) having a rectangular trapezium section.

7. A method of fabricating a dashboard assembly of a vehicle comprising a shell (6) provided with an underside face (15), and an electric system (16) including wiring (17) for a number of components and/or connectors, comprising the steps of:
- forming said shell (6) moulded in one piece with a first plastic material;
- forming separately said raceway (20) with a plastic material compatible with the plastic material of said shell (6), said raceway (20) defining at least a hollow section (24) forming a channel (26) with a closed-cross-section comprising a wall (27) adapted to mate with and rest on said underside face (15);
- forming said wiring (17) by positioning a number of electric cables (25) successively along respective paths according to the route of at least part of said raceway (20) to form corresponding bundles (18, 19);
- embedding at least one of said cables (25) and/or one of said bundles (18, 19) inside said channel (20) in a foam or in the plastic material of said channel (20);
- preassembling said components and/or connectors on said shell (6);
- connecting said components and/or connectors to said electric cables (25); and
- connecting said raceway (20) integrally to said underside face (15).

## Patentansprüche

1. Armaturenbrett (5) für ein Fahrzeug mit einem elektrischen System (16) umfassend eine Verkabelung (17) für eine Anzahl von Instrumenten und/oder Steuerungen an dem Fahrzeug, wobei das Armaturenbrett (5) eine Schale (6) umfasst, die aus einem ersten Kunststoffmaterial geformt ist und eine unterseitige Fläche (15) aufweist, sowie zumindest einen Kabelkanal (20) für eine Anzahl von elektrischen Kabeln (25) oder ein Kabelbündel (18, 19), wobei der Kabelkanal (20) separat von der Schale (6) gefertigt ist und dann integral damit verbunden ist, wobei mindestens eines der Kabel (25) und/oder das Kabelbündel (18, 19) in einer im Wesentlichen fixen Position in den Kabelkanal (20) eingebettet ist, **dadurch gekennzeichnet, dass** der Kabelkanal (20) aus einem zweiten Kunststoffmaterial hergestellt ist, kompatibel mit dem ersten Kunststoffmaterial, wobei der Kabelkanal (20) definiert wird durch einen Hohlabschnitt (24), der einen Kanal (26) mit einem geschlossenen Querschnitt ausbildet, wobei der Hohlabschnitt (24) an der unterseitigen Fläche (15) befestigt ist und wobei der Hohlabschnitt (24) eine Wand (27) umfasst, die gepasst ist bezüglich und aufliegt an der unterseitigen Fläche (15), wenn entsprechend verbunden.

2. Armaturenbrett gemäß Anspruch 1, **dadurch gekennzeichnet, dass** der Hohlabschnitt (24) mit Hilfe eines Abdeckschaummaterials (31) an die Schale (6) befestigt ist.

3. Armaturenbrett gemäß Anspruch 1, **dadurch gekennzeichnet, dass** der Hohlabschnitt (24) zwei einander gegenüberliegend angeordnete Flansche (28) umfasst, wobei die Flansche (28) von der Wand (27) und in der Gestalt einer Extension vorspringen, wobei die vorspringenden Flansche (28) durch Bonding an die unterseitige Fläche (15) befestigt sind.

4. Armaturenbrett gemäß einem der vorangehenden Ansprüche, **dadurch gekennzeichnet, dass** die elektrischen Kabel (25) im Inneren des Kabelkanals (20) eingebettet sind in einem Schaummaterial oder in dem Kunststoffmaterial des Kabelkanals (20).

5. Armaturenbrett gemäß einem der vorangehenden Ansprüche, wobei mindestens eine Elektrikkomponente oder Konnektor (47) an ein Kabel (25) der Verkabelung (17) zu verbinden ist, wobei an dem Kanal (26) zwei laterale Zungen (32, 33) bereitgestellt sind, **dadurch gekennzeichnet, dass** mindestens einer der Zungen (32, 33) mit Öffnungen (44) bereitgestellt ist, für den Durchtritt von korrespondierenden Abzweigungsbündeln (19), wobei mindestens eine der Öffnungen (44) angepasst ist, den Elektrikkonnektor (47) unterzubringen.

6. Armaturenbrett gemäß Anspruch 5, **dadurch gekennzeichnet, dass** die mindestens eine Öffnung (44) durch ein Paar von lateralen, gegenüberliegenden Wänden (46) definiert ist, integral mit der mindestens einen Zunge (32, 33) und senkrecht diesbezüglich, wobei die gegenüberliegenden Wände (46) mit Ausnehmungen (48) bereitgestellt sind, die angepasst sind um in einem Schnappeingriff mit korrespondierenden Vorsprüngen (49) der Elektrikkomponente oder des Konnektors (47) stehen zu können, wobei jeder Vorsprung (49) einen als rechteckiges Trapezoid geformten Abschnitt aufweist.

7. Verfahren zum Herstellen einer Armaturenbrettanordnung eines Fahrzeugs, umfassend eine Schale (6), bereitgestellt mit einer unterseitigen Fläche (15), und ein Elektriksystem (16) einschließlich einer Verkabelung (17) für eine Anzahl von Komponenten und/oder Konnektoren, wobei das Verfahren die Schritte umfasst:
- Formen der Schale (6), welche in einem Stück aus einem ersten Kunststoffmaterial gegossen ist;
- Separates Formen des Kabelkanals (20) mit einem Kunststoffmaterial, das kompatibel ist mit dem Kunststoffmaterial der Schale (6) wobei der Kabelkanal (20) mindestens einen Hohlabschnitt (24) definiert, der einen Kanal (26) formt mit einem geschlossenen Querschnitt, der eine Wand (27) umfasst, die ausgelegt ist um gepasst zu werden und um aufzuliegen an der unterseitigen Fläche (15);
- Formen der Verkabelung (17) mittels Positionierung einer Anzahl von Elektrikkabeln (25) sukzessive entlang entsprechender Pfade gemäß der Route zumindest eines Teils des Kabelkanals (20), um korrespondierende Bündel (18, 19) auszubilden;
- Einbetten zumindest eines der Kabel (25) und/oder eines der Bündel (18, 19) innerhalb des Kanals (20) in einem Schaum oder in dem Kunststoffmaterial des Kanals (20);
- Vormontieren der Komponenten und/ oder Konnektoren an der Schale (6);
- Verbinden der Komponenten und/oder Konnektoren mit den Elektrikkabeln (25); und
- Integrales Verbinden des Kabelkanals (20) mit der unterseitigen Fläche (15).

## Revendications

1. Tableau de bord (5) pour un véhicule ayant un système électrique (16) comprenant un câblage (17) pour un certain nombre d'instruments et/ou de commandes sur le véhicule, ledit tableau de bord (5) comprenant une coque (6) formée d'un premier matériau plastique et ayant une face inférieure (15), et au moins une conduite (20) pour un certain nombre de câbles électriques (25) ou un faisceau de câbles (18, 19), ladite conduite (20) étant fabriquée séparément de ladite coque (6) et étant ensuite raccordée d'une seule pièce avec celle-ci, au moins un desdits câbles (25) et/ou ledit faisceau de câbles (18, 19) étant encastré(s) en position sensiblement fixe à l'intérieur de ladite conduite (20), **caractérisé en ce que** ladite conduite (20) est faite d'un second matériau plastique compatible avec ledit premier matériau plastique, ladite conduite (20) étant définie par une section creuse (24) formant un canal (26) avec une section transversale fermée, ladite section creuse (24) étant fixée à ladite face inférieure (15), ladite section creuse (24) comprenant une paroi (27) s'adaptant à ladite face inférieure (15) et reposant sur celle-ci lorsqu'elle est raccordée de la sorte.

2. Tableau de bord selon la revendication 1, **caractérisé en ce que** ladite section creuse (24) est fixée à ladite coque (6) à l'aide d'un matériau expansé de recouvrement (31).

3. Tableau de bord selon la revendication 1, **caractérisé en ce que** ladite section creuse (24) comprend deux bords opposés (28) qui dépassent et qui se présentent sous la forme d'une extension de ladite paroi (27), lesdits bords sailliants (28) étant fixés à ladite face inférieure (15) par liaison.

4. Tableau de bord selon l'une quelconque des revendications précédentes, **caractérisé en ce que** lesdits câbles électriques (25) sont encastrés à l'intérieur de ladite conduite (20) dans un matériau expansé ou dans un matériau plastique de ladite conduite (20).

5. Tableau de bord selon l'une quelconque des revendications précédentes, dans lequel au moins un composant ou connecteur électrique (47) doit être connecté à un câble (25) dudit câblage (17), ledit canal (26) étant pourvu de deux pattes latérales (32, 33), **caractérisé en ce qu'**au moins une desdites pattes (32, 33) est pourvue d'ouvertures (44) pour le passage de faisceaux d'embranchements correspondants (19), au moins une desdites ouvertures (44) étant adaptée pour loger ledit connecteur électrique (47).

6. Tableau de bord selon la revendication 5, **caractérisé en ce que** ladite au moins une ouverture (44) est définie par une paire de parois latérales opposées (46) d'un seul tenant avec ladite au moins une patte (32, 33) et perpendiculaires à celle-ci, lesdites parois opposées (46) étant munies d'ouvertures (48) configurées de manière à s'engager par encliquetage avec des saillies correspondantes (49) d'un composant ou d'un connecteur électrique (47), chaque dite saillie (49) ayant une section en trapèze rectangle.

7. Procédé de fabrication d'un assemblage de tableau de bord d'un véhicule, comprenant une coque (6) pourvue d'une face inférieure (15) et un système électrique (16) avec le câblage (17) pour un certain nombre de composants et/ou de connecteurs, comprenant les étapes consistant à :
- former ladite coque (6) moulée d'un seul tenant avec un premier matériau plastique ;
- former séparément ladite conduite (20) avec un matériau plastique compatible avec le matériau plastique de ladite coque (6), ladite conduite (20) définissant au moins une section creuse (24) formant un canal (26) avec une section transversale fermée comprenant une paroi (27) configurée de manière à s'adapter à ladite face inférieure (15) et à reposer sur celle-ci ;
- former ledit câblage (17) en plaçant un certain nombre de câbles électriques (25) successivement le long de chemins respectifs en fonction du trajet d'au moins une partie de ladite conduite (20) afin de former des faisceaux correspondants (18, 19) ;
- incorporer au moins un desdits câbles (25) et/ou un desdits faisceaux (18, 19) à l'intérieur dudit canal (20) à une mousse ou au matériau plastique dudit canal (20) ;
- pré-assembler lesdits composants et/ou connecteurs sur ladite coque (6) ;
- connecter lesdits composants et/ou connecteurs auxdits câbles électriques (25) ; et
- raccorder ladite conduite (20) d'une seule pièce à ladite face inférieure (15).
